# FASCICULE DE BREVET EUROPEEN

(11) **EP 4 028 657 B1**
(45) Date de publication et mention de la délivrance du brevet: **04.10.2023**
(21) Numéro de dépôt: 20761575.8
(22) Date de dépôt: 26.08.2020
(51) Int. Cl.: F02D 35/02, F02D 41/40, F02P 5/152, F02D 41/28

(54) **DÉTERMINATION DE CARACTÉRISTIQUES D'OUVERTURE D'UN INJECTEUR DE CARBURANT**
BESTIMMUNG VON KRAFTSTOFFEINSPRITZVENTILÖFFNUNGSCHARAKTERISTIKA
DETERMINATION OF FUEL INJECTOR OPENING CHARACTERISTICS

(30) Priorité: 11.09.2019 FR 1910017
(43) Date de publication de la demande: 20.07.2022
(73) Titulaire: Borgwarner Luxembourg Automotive Systems SA, 4940 Bascharage (LU)
(72) Inventeur: RANDAZZO, Stephane, 57290 Fameck (FR); BOURGEOIS, Cedric, 57100 Thionville (FR)
(74) Mandataire: Office Freylinger
(86) Numéro de dépôt international: PCT/EP2020/073794
(87) Numéro de publication internationale: WO 2021/047906

(56) Documents cités:
- EP-A1- 3 032 077
- DE-A1- 19 536 110
- DE-A1-102010 040 622
- DE-A1-102011 008 907
- GB-A- 2 566 736

## Description

### DOMAINE TECHNIQUE

La présente invention concerne généralement le domaine de l'injection de carburant dans les moteurs à combustion interne, et plus particulièrement la détermination de caractéristiques d'ouverture d'un injecteur de carburant.

### ETAT DE LA TECHNIQUE

Les systèmes d'injection de carburant modernes emploient typiquement des injecteurs de carburant commandés électro-mécaniquement, par exemple par des actionneurs à solénoïde, qui permettent de commander l'ouverture et la fermeture de l'injecteur par la levée de l'aiguille, afin d'injecter du carburant dans la chambre de combustion. Selon le type de moteur, l'aiguille peut être commandée directement par l'actionneur (par ex. Moteur essence) ou commandée hydrauliquement au moyen d'une chambre dont le remplissage est commandé via l'actionneur, opérant ainsi un contrôle indirect.

De manière générale, on observe un décalage entre début du signal de commande de l'injecteur (le front montant du signal électrique) et le moment où l'aiguille commence à se lever (se décolle de son siège). Dans le contexte de la présente demande, ce décalage est appelé "délai d'ouverture".

On connait différents procédés pour déterminer le délai d'ouverture d'un injecteur.

Il a par exemple été proposé dans le EP 2884084 de déterminer le délai d'ouverture d'un injecteur à partir de la trace courant. Un tel procédé requiert une voie de mesure supplémentaire dédiée, et la mise en oeuvre d'une séquence de mesure avec un mode de commande spécifique.

Alternativement, le US 5,747,684 propose de déterminer les délais d'ouverture et de fermeture d'un injecteur à partir d'un signal d'accéléromètre couplé à l'injecteur. En effet, lorsque l'armature de l'actionneur rencontre la pièce polaire de l'actionneur lors de l'ouverture, l'énergie de l'impact provoque des vibrations mécaniques dans la structure, qui peuvent être détectées par un accéléromètre. Cette énergie vibratoire s'atténue et la trace de l'accéléromètre décroit. A la fermeture, un événement similaire se produit lorsque l'aiguille rencontre le siège. La détermination des moments de l'ouverture et de la fermeture se fait sur base de l'énergie contenue dans le signal d'accéléromètre (intégration du signal).

Le DE 102010040622 propose également l'utilisation de l'énergie vibratoire d'un accéléromètre pour la détermination du début d'injection, ou encore l'exploitation de l'angle de phase du signal de capteur, ou le critère d'information de Akaike.

L'objet de l'invention est de fournir une méthode améliorée de la détermination de caractéristiques d'ouverture d'un injecteur.

### DESCRIPTION GENERALE DE L'INVENTION

L'idée à la base de l'invention réside dans l'utilisation d'un capteur de cliquetis, appelé en anglais « knock sensor », pour la détection du moment d'ouverture d'un injecteur de carburant. Les présents inventeurs ont en effet établi que le capteur cliquetis, qui équipement conventionnellement les moteurs à essence, peut être utilisé pour une détection fiable du moment (timing) d'ouverture de plusieurs injecteurs. L'utilisation du capteur de cliquetis est ainsi détournée, à la demande, pour réaliser une mesure des caractéristiques d'ouverture des injecteurs.

Il n'est donc pas nécessaire, comme dans les US 5,747,684 ou DE 202013104714 U1, de mettre des accéléromètres dédiés sur chaque injecteur.

Selon un premier aspect, l'invention concerne un procédé de détermination de caractéristiques d'ouverture d'un injecteur de carburant dans un moteur à combustion interne comprenant un bloc moteur avec une pluralité de cylindres de combustion, ainsi qu'un capteur de cliquetis monté sur le bloc moteur, apte à générer un signal représentatif des vibrations du bloc moteur, le procédé comprenant :
- acquérir le signal du capteur de cliquetis sur une fenêtre de mesure prédéterminée synchronisée sur un signal de commande d'injection ;
- analyser le signal du capteur sur la fenêtre de mesure pour :
   ∘ déterminer une première alternance d'un premier train d'ondes ; et
   ∘ déterminer le maximum local de la première alternance.

Le procédé est remarquable en ce que la caractéristique d'ouverture de l'injecteur est déterminée sur base de ce maximum local.

Des tests de validations du présent procédé ont permis de montrer que la première alternance (ou premier pic) du premier train d'ondes arrivant dans la fenêtre de mesure correspond bien au moment où l'armature vient en butée supérieure dans l'injecteur, ce qui correspond au moment du début réel d'injection, quand l'aiguille se lève du siège de la buse d'injection. Le temps correspondant maximum local (ou extremum ; qui peut être positif ou négatif) de cette première alternance peut être valablement utilisé comme lié au moment du début de l'ouverture de l'injecteur. Les premiers essais ont montré que la précision de la présente méthode est excellente et ne dévie pas de plus de 5 µs des valeurs obtenues par la méthode de référence (mesure sur banc hydraulique).

Comme expliqué ci-après, le présent procédé donne accès, sur base du simple capteur de cliquetis conventionnel, aux caractéristiques d'ouverture telles que le moment d'ouverture et le délai d'ouverture.

Le capteur de cliquetis est un capteur apte à enregistrer les vibrations du bloc moteur dans les fréquences appropriées pour le phénomène observé. De préférence, le capteur de cliquetis est un accéléromètre, en particulier du type piézoélectrique. Le capteur de cliquetis est monté sur le bloc moteur ; il peut être fixé sur le bloc cylindre ou sur la culasse. Dans les moteurs à trois ou six cylindres, on utilise généralement un capteur de cliquetis par bloc cylindre. Dans un moteur à quatre cylindres, on peut employer un ou deux capteurs de cliquetis, dans ce dernier cas chaque capteur est placé entre deux cylindres.

Le signal acquis / enregistré est analysé sur la fenêtre de mesure, dans laquelle on va rechercher un point qui correspond au moment de l'ouverture de l'injecteur. Cette fenêtre est synchronisée par rapport au signal électrique de commande de l'injecteur. Pour la facilité de mise en oeuvre, le début de la fenêtre de mesure coïncide avec le début du signal de commande d'injecteur (noté t0). La durée de la fenêtre de mesure est déterminée par calibration. Elle peut avoir une durée entre 0,6 et 1,5 ms, en particulier de l'ordre de 1 ms.

Avantageusement, pour l'acquisition du signal du capteur de cliquetis en vue de la détermination des caractéristiques d'ouverture, le capteur de cliquetis est configuré pour l'acquisition dans une gamme de fréquences d'acquisition correspondant aux vibrations causées par l'actionnement de l'injecteur, et donc permettant de les visualiser, par exemple dans la gamme 600 à 800 kHz.

Selon un mode de réalisation, la détection de la première alternance du premier train d'ondes se fait aisément en appliquant un seuil de détection. On sélectionne donc la première alternance qui dépasse le seuil de détection. Le point recherché, c'est-à-dire le temps correspondant au bruit du début d'ouverture, est alors déterminé comme le maximum local de la première alternance : c'est le moment d'ouverture de l'injecteur, noté t1.

Avantageusement, le moment d'ouverture t1 est corrigé pour prendre en compte la distance entre le capteur et le cylindre concerné. En effet, plus le cylindre est éloigné du capteur de cliquetis, plus il faut de temps aux vibrations causées par l'ouverture pour atteindre le capteur de cliquetis.

Selon les variantes, on détermine, pour chaque cylindre, une constante de temps de transport CT comme ordonnée à l'origine de la droite de régression pour un ensemble de points représentant, pour des injecteurs différents, le moment d'ouverture de l'injecteur (t1) et le moment d'ouverture de référence correspondant. Le point de référence est typiquement mesuré au banc d'essai hydraulique.

La constante de temps de transport CT est donc utilisée pour déterminer le moment d'ouverture corrigé t_{corr} qui se calcule : t_{corr} = t1 - CT.

Le délai d'ouverture peut donc être calculé comme DO = _{corr} - t0.

Le délai d'ouverture et/ou le moment d'ouverture de l'injecteur ainsi déterminés peuvent être avantageusement employé par le calculateur de véhicule, notamment pour le contrôle d'injection. Le délai d'ouverture a un intérêt particulier pour le calcul de la durée du signal de commande d'injecteur, qui va influer sur la quantité de carburant injecté.

Selon les variantes, le présent procédé est mis en oeuvre dans des zones de faible charge, par ex. un couple inférieur à 40 N.m. Alternativement, la mise en oeuvre du présent procédé peut s'accompagner d'une modification d'avance à l'allumage pour éviter le cliquetis.

Comme déjà indiqué, le procédé selon l'invention est particulièrement intéressant car il permet de mesurer des caractéristiques d'ouverture d'injecteur sur base d'un capteur de cliquetis qui est présent d'office dans les moteurs à allumage commandé. Néanmoins le présent procédé est transposable aux moteurs diesel, où il permettra, après ajout d'un accéléromètre, de détecter l'activation de la vanne de commande de l'injecteur, et donc similairement le début d'ouverture de l'injecteur).

Selon un autre aspect, l'invention concerne un procédé de fonctionnement d'un moteur à combustion interne, dans lequel l'injection de carburant est commandée sur base d'une caractéristique d'ouverture d'injecteur déterminée au moyen du procédé décrit ci-avant. De manière générale, la caractéristique d'ouverture d'injecteur ainsi déterminée peut être utilisée, de manière connue en soi, pour le calcul de la quantité de carburant injectée ou de la durée d'ouverture d'injecteur, sur base également de la durée du signal de commande d'injecteur (Pulse Width) et typiquement du délai de fermeture d'injecteur.

Selon un troisième aspect, l'invention concerne un procédé de fonctionnement d'un moteur à combustion interne à allumage commandé, comprenant un bloc moteur avec une pluralité de cylindres auxquels sont associé des injecteurs de carburant respectifs, et au moins un capteur de cliquetis monté sur le bloc moteur, dans lequel un calculateur est configuré pour surveiller le cliquetis sur base du signal du capteur de cliquetis, et dans lequel calculateur est configuré pour, à intervalles prédéfinis, utiliser le signal de capteur de cliquetis pour déterminer une caractéristique d'ouverture d'injecteur conformément au présent procédé de détermination de caractéristiques d'ouverture d'un injecteur.

Ainsi, le capteur de cliquetis est utilisé principalement pour surveiller la qualité de la combustion. Le signal du capteur de cliquetis est donc, la majorité du temps, utilisé pour calculer un index de cliquetis qui reflète la combustion de chaque cycle au niveau de chaque cylindre. Le signal de cliquetis, resp. l'index de cliquetis, est alors utilisé pour déterminer l'avance à l'allumage.

Mais, de temps en temps, par exemple à des intervalles donnés, le signal de cliquetis est utilisé pour déterminer le délai d'ouverture d'un injecteur, conformément au procédé divulgué ici. Cette valeur de délai d'ouverture pourra ensuite être avantageusement employée dans le calcul de la durée du signal de commande d'injecteur pour chaque cycle de combustion.

### DESCRIPTION DETAILLEE A L'AIDE DES FIGURES

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
[Fig. 1] une vue de principe d'un moteur équipé d'un capteur de cliquetis ;
[Fig. 2] un graphe illustrant l'évolution dans le temps de la tension de commande d'injecteur et du signal du capteur de cliquetis ;
[Fig. 3] est un détail de la Fig.2 ;
[Fig. 4] est un graphe représentant le signal du capteur de cliquetis en fonction du temps, autour du début du premier train d'ondes ; et [Fig. 5] est un graphe illustrant la corrélation entre le moment d'ouverture brut déterminé sur base du signal de capteur de cliquetis et temps d'ouverture mesuré au banc.

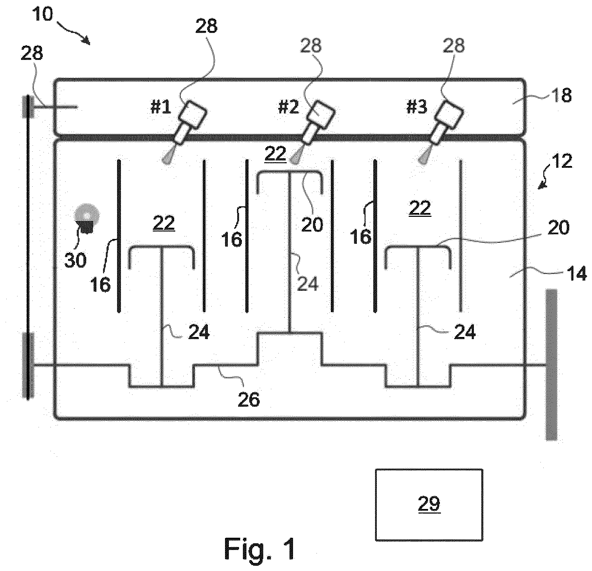

La figure 1 représente schématiquement un moteur à combustion interne 10 conventionnel, ici du type à allumage commandé. Le bloc moteur 12 comprend un bloc cylindres 14 avec trois cylindres 16 fermés par une culasse 18. Un piston 20 est monté coulissant dans chaque cylindre 16, la face supérieure du cylindre définissant avec les parois latérales du cylindre et la culasse une chambre de combustion 22. Les pistons 20 sont reliés chacun par une bielle 24 à un vilebrequin 26. Le vilebrequin 26 est couplé en rotation à l'arbre à cames 28 dans la culasse 18, aux fins d'actionnement des soupapes (non montrées) montées dans la culasse pour l'entrée et la sortie des fluides. Le signe de référence 28 désigne des injecteurs montés de sorte à permettre l'injection directe de carburant (essence ou autres) dans la chambre de combustion. Une bougie d'allumage (non montrée) est également associée à chaque cylindre pour déclencher, sur commande, la combustion. Le moteur comprend un calculateur de véhicule 29 (ECU en anglais) programmé pour commander le fonctionnement du moteur et particulièrement gérer la combustion, notamment via la commande d'injection de carburant et le réglage de l'allumage.

Comme on le sait, dans un moteur à combustion interne, la combustion du mélange air/essence commence normalement après l'étincelle générée par la bougie. Le front de flamme se propage et son souffle repousse une partie du mélange contre les parois du cylindre et le sommet du piston. L'élévation de pression et de température est parfois suffisamment importante pour que le mélange non brulé atteigne son point d'auto-allumage et s'auto-enflamme en un ou plusieurs endroits. Ce phénomène est appelé « cliquetis ». Le cliquetis est avant tout un phénomène de combustion anormale dans les moteurs à allumage commandé, perceptible extérieurement par un bruit métallique venant du moteur qui résulte de l'apparition d'ondes de pression dans la chambre de combustion. Ces explosions parasites produisent des vibrations dans le domaine acoustique et au-delà (typiquement de l'ordre de 5 à 80 KHz). Elles sont très vives et peuvent rapidement conduire à un échauffement localisé. A la longue, le cliquetis conduit à un endommagement du métal du piston et/ou des parois du cylindre et des segments. Le cliquetis peut donc, à terme, mener à la destruction de composants moteurs. L'estimation du cliquetis permet un contrôle de la combustion limitant l'effet du cliquetis et n'endommageant pas le moteur. A cet effet, les moteurs sont conventionnellement équipés d'un capteur de cliquetis monté sur le bloc moteur. Dans la Fig. 1, un capteur de cliquetis 30 est fixé au bloc-cylindres 14.

Le capteur de cliquetis 30 est par exemple un accéléromètre, en particulier du type piézoélectrique. Conventionnellement, un tel capteur est vissé sur le bloc moteur. Il comprend un transducteur piézoélectrique pour la détection des vibrations de détonation, qui lui sont typiquement transmises via une masse sismique agencée dans le boitier entre le transducteur et une partie liée au moteur.

Le capteur de cliquetis émet donc des signaux électriques générés par les vibrations du bloc cylindres, au cours de chaque cycle de combustion. Ces signaux sont transmis au calculateur, qui filtre les fréquences qui ne se rapportent pas aux fréquences de vibration de détonation. Aussi, le signal n'est considéré que sur une fenêtre de mesurée prédéterminée, définie pour une partie du cycle de combustion (angle de vilebrequin), qui correspond à la phase d'allumage/combustion. Une valeur de cliquetis est calculée, et comparée à un seuil.

Le capteur de cliquetis permet ainsi de vérifier, pour chaque cycle de combustion, la présence ou l'absence de cliquetis.

Sur un moteur essence à trois ou quatre cylindres, un capteur de cliquetis est suffisant pour mesurer le cliquetis sur les différents cylindres, puisque les combustions sont décalées. Pour plus de précision dans un moteur 4 cylindres, on peut monter deux capteurs de cliquetis, placés entre les deux premiers et les deux derniers moteurs. Dans un moteur 6 cylindres en V, on pourra utiliser un capteur de cliquetis sur chaque bloc cylindre.

La présente invention met à profit le capteur de cliquetis conventionnel pour la détermination de caractéristiques d'ouverture des injecteurs, notamment pour détection du moment d'ouverture de l'injecteur ainsi que du délai d'ouverture.

En effet, l'actionnement (ouverture/fermeture) d'un injecteur de carburant génère un bruit qui est détectable par le capteur de cliquetis, comme expliqué dans la partie introductive. Le bruit d'injecteur est généralement présent sur une large bande de fréquences (bruit blanc) et sur une gamme de fréquences intéressante pour l'analyse de combustion.

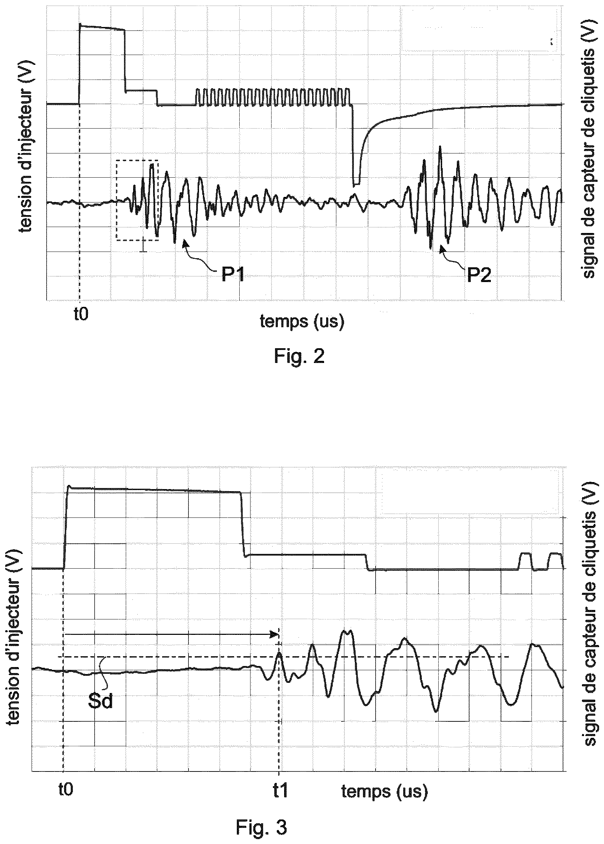

Le graphe de la Figure 2 comprend, dans sa partie supérieure la trace du signal de commande d'injecteur (tension) appliqué à un injecteur dans un cylindre, et en partie inférieure, la trace correspondante du signal du capteur de cliquetis. Le signal de commande est de forme classique : il démarre par un échelon pour décoller l'aiguille d'injecteur puis se poursuit par une séquence d'oscillations qui visent à maintenir l'aiguille en position d'ouverture. Le début du front montant du signal de commande, qui correspond au signal logique de début d'injection, est noté t0.

Comme on le sait, l'alimentation de l'actionneur à solénoïde de l'injecteur engendre un champ électrique qui attire une armature commandant la force d'ouverture sur l'aiguille. Lorsque l'armature arrive en bout de course, elle bute contre la structure de l'injecteur, typiquement contre une pièce polaire, ce qui génère un bruit dit d'ouverture. Les vibrations du bruit d'ouverture se propagent dans le bloc moteur et sont enregistrées par le capteur de cliquetis, ce qui donne le premier train d'ondes, noté P1, observé sur la trace du capteur. Le terme train d'ondes, ou encore paquet, désigne ici la série d'oscillations du signal représentant des ondes arrivant de manière chronologique sur le capteur, donc entre un début et une fin.

A la fermeture de l'injecteur, l'impact de l'aiguille sur son siège génère un bruit de fermeture, qui produit le deuxième train d'ondes P2.

Conformément au présent procédé, le capteur de cliquetis conventionnel du moteur est mis à profit pour déterminer le moment d'ouverture de l'injecteur.

Comme le bruit d'ouverture intervient en conséquence du signal de commande d'ouverture, on enregistre le signal de capteur de cliquetis sur une fenêtre de mesure calée par rapport au début d'injection, et dont le début coïncide préférablement avec le début du front montant, c.-à-d. à t0 sur le graphe. La durée de la fenêtre de mesure est prédéfinie, prenant préférablement en compte les autres événements moteur. La durée de la fenêtre de mesure peut être par exemple de l'ordre de 1 ms.

Le signal de mesure obtenu pour cette fenêtre de mesure est avantageusement acquis avec une haute fréquence, par exemple entre 600 kHz et 800 kHz. On applique ensuite avantageusement un filtre passe bas pour lisser le signal. C'est ce signal filtré qui est représenté aux Figs.2 et 3.

Conformément au présent procédé, on considère que la première alternance du premier train d'ondes après le temps t0 est dû à l'ouverture de l'injecteur, et que le maximum local de cette alternance correspond au moment d'ouverture de l'injecteur.

En pratique, ce point peut être détecté de manière simple en appliquant un seuil de détection Sd, et en déterminant le temps correspondant au maximum local de la première alternance au-dessus du seuil après le début de fenêtre de mesure (t0). Cela est illustré à la Fig.3.

Le seuil de détection Sd est une valeur calibrée pour chaque cylindre, de sorte à éliminer le bruit de fond après de début d'injection. En pratique, selon la configuration moteur, la première alternance du premier train d'ondes peut être positive ou négative. Ainsi le seuil de détection pourra être positif ou négatif. Le calibrage du seuil Sd peut consister en une optimisation par cylindre avec plusieurs injecteurs (par ex 3 ou plus), afin de rechercher le meilleur compromis entre l'élimination du bruit avant l'onde et la détection du premier pic.

Le moment correspondant à l'ouverture est le premier maximum local, noté t1, qui suit le passage du seuil Sd.

La flèche horizontale sur la figure 3 représente le délai entre le début du signal de commande d'injection et le moment de la détection de la levée de l'aiguille (début d'injection).

On notera que le temps t1 déterminé ci-dessus est biaisé par le temps de réaction du capteur de cliquetis et par le temps de transport des ondes entre le cylindre concerné (#1, #2 ou #3) et le capteur de cliquetis 30. Lorsque le capteur de cliquetis 30 est placé à une extrémité du bloc cylindres, comme en Fig.1, on comprendra que le temps de transport de l'onde est plus grand pour le cylindre 2 que pour le cylindre 1, et encore davantage pour le cylindre 3.

Il est donc souhaitable d'appliquer une correction qui tient compte de la distance entre le capteur et le cylindre concerné. Le principe de cette correction est expliqué ci-dessous.

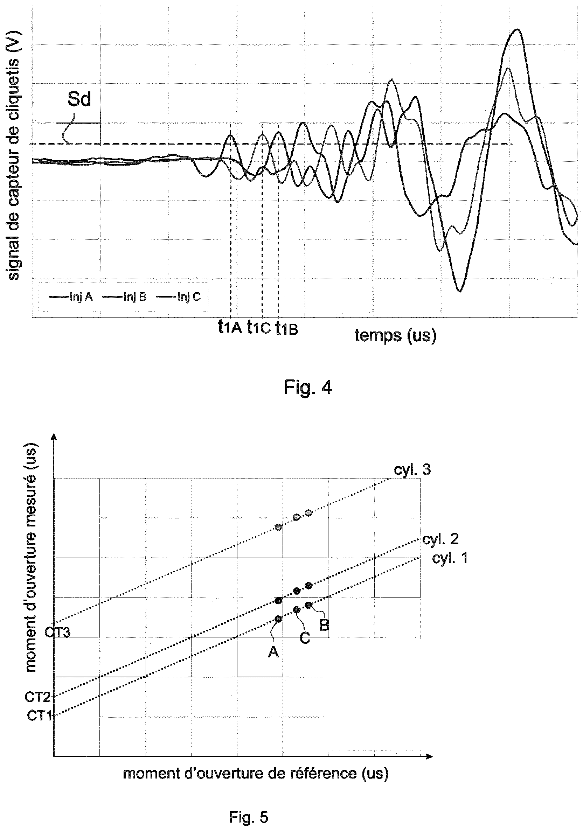

La figure 4 est un graphe qui représente les traces du capteur de cliquetis 30 pour les injecteurs A, B et C, sur un même cylindre (ici le cylindre 1). Ces trois injecteurs ont été sélectionnés au banc d'essai hydraulique spécifique (système avec mesure de pression cylindre) pour leur temps d'ouverture différents.

Cela se reflète bien dans le graphique, où l'on peut observer trois moments d'ouverture différents, notés t1A, t1B et t1C. A chaque fois, le moment d'ouverture est identifié comme le premier maximum local suivant le passage du seuil de détection Sd.

La Figure 5 est un graphe qui comprend en abscisse le délai d'ouverture d'injecteur de référence et en ordonnée le délai d'ouverture t1 déterminé selon le procédé décrit ci-dessus. Ce graphe établit donc une corrélation entre les délais d'ouverture t1 qui sont des délais bruts mesurés à l'aide du capteur de cliquetis, c'est-à-dire t1A, t1B et t1C, et les temps d'ouverture de référence de ces mêmes injecteurs, qui sont déterminés au banc d'essai, et ce pour chacun des cylindres du moteur (1, 2 et 3). On notera que sur le banc d'essai les moments d'ouverture sont déterminés avec précision et donc considérer comme la référence.

On observe, pour chacun des cylindres, une corrélation linéaire entre les trois points. On détermine alors l'ordonnée à l'origine de la droite de régression, pour chaque cylindre.

En effet, pour chaque cylindre, ce qui différencie les valeurs obtenues pour le moment d'ouverture est lié au délai d'ouverture de l'injecteur. Le temps de transport par cylindre est le même. En faisant cette hypothèse de corrélation linéaire, l'ordonnée à l'origine représente la contribution du temps de transport (et de réaction du capteur) dans la valeur du moment d'ouverture mesuré. L'ordonnée à l'origine est donc une constante de temps de transport, que l'on note CT.

Pour chaque cylindre on pourra donc calculer le moment d'ouverture corrigé t1corr comme : t1corr = t1 - CT

Et le délai d'ouverture peut être calculé comme OD = t1corr - t0.

Bien sûr, si on a t0 = 0, alors on a directement OD = t1 - CT.

Le calculateur 29 peut être programmé pour mettre en oeuvre le présent procédé afin de déterminer le délai d'ouverture de l'injecteur. Le signal de capteur de cliquetis est alors utilisé pour la détermination du délai d'ouverture d'injecteur, au lieu de l'index de cliquetis. La nouvelle valeur calculée de délai d'ouverture est alors mise à jour dans le calculateur, et pourra être utilisée dans la commande d'injection, notamment pour le calcul de la durée du signal de commande d'injecteur.

Les moments auxquels le calculateur met en oeuvre le présent procédé peuvent être prédéfinis, à intervalles réguliers ou non. Le présent procédé est de préférence mis en oeuvre dans des zones de faible charge/couple, par ex. inférieur à 40 n.m.

## Revendications

1. Procédé de fonctionnement d'un moteur à combustion interne comprenant un bloc moteur avec une pluralité de cylindres de combustion (16) et des injecteurs associés, ainsi qu'un capteur de cliquetis (30) monté sur le bloc moteur (14), apte à générer un signal représentatif des vibrations du bloc moteur, dans lequel l'injection de carburant est commandée sur base d'une caractéristique d'ouverture d'injecteur déterminée au moyen d'un procédé de détermination comprenant :
acquérir le signal du capteur de cliquetis sur une fenêtre de mesure prédéterminée synchronisée sur un signal de commande d'injection ;
analyser le signal du capteur sur la fenêtre de mesure pour :
- déterminer une première alternance d'un premier train d'ondes ; et
déterminer le maximum local de la première alternance,
dans lequel la caractéristique d'ouverture de l'injecteur est déterminée sur base de ce maximum local, le signal du capteur de cliquetis étant configuré pour l'acquisition dans une gamme de fréquences correspondant aux vibrations causées par l'actionnement de l'injecteur, l'acquisition étant dans la gamme de fréquences 600 à 800 kHz.

2. Procédé selon la revendication 1, dans lequel on applique un seuil de détection, et on sélectionne la première alternance qui dépasse le seuil de détection.

3. Procédé selon l'une quelconque des revendications précédentes, dans lequel on définit le maximum local de la première alternance comme moment d'ouverture de l'injecteur (t1).

4. Procédé selon l'une quelconque des revendications précédentes, dans lequel le moment d'ouverture (t1) est corrigé pour prendre en compte la distance entre le capteur et le cylindre concerné.

5. Procédé selon la revendication 3 ou 4, dans lequel le délai d'ouverture (OD) est calculé comme la différence entre le moment de l'ouverture de l'injecteur (t1), corrigé, et le moment (t0) du début du signal de commande d'injection.

6. Procédé selon la revendication 4 ou 5, dans lequel on détermine une constante de temps de transport (CT) pour chaque cylindre comme ordonnée à l'origine de la droite de régression pour un ensemble de points représentant, pour des injecteurs différents, le moment d'ouverture de l'injecteur (t1) et le moment d'ouverture de référence correspondant.

7. Procédé selon l'une quelconque des revendications précédentes, dans lequel le début de la fenêtre de mesure coïncide avec le début du signal de commande d'injecteur.

8. Procédé selon la revendication 7, dans lequel la fenêtre de mesure a une durée entre 0,6 et 1,5 ms, en particulier de l'ordre de 1 ms.

9. Procédé selon l'une quelconque des revendications précédentes, dans lequel le capteur de cliquetis est un accéléromètre.

10. Procédé selon l'une quelconque des revendications précédentes, dans lequel ladite acquisition du signal du capteur de cliquetis sur une fenêtre de mesure prédéterminée est réalisée lorsque le moteur opère dans une zone de faible charge, en particulier avec un couple inférieur à 40 N.m.

11. Procédé de fonctionnement d'un moteur à combustion interne à allumage commandé, comprenant un bloc moteur avec une pluralité de cylindres auxquels sont associé des injecteurs de carburant respectifs, et au moins un capteur de cliquetis monté sur le bloc moteur, dans lequel un calculateur est configuré pour surveiller le cliquetis sur base du signal du capteur de cliquetis, et dans lequel calculateur est configuré pour mettre en oeuvre le procédé de fonctionnement selon l'une quelconque des revendications 1 à 10 en utilisant, à intervalles prédéfinis, le signal de capteur de cliquetis pour déterminer la caractéristique d'ouverture d'injecteur.

12. Procédé selon la revendication 12, dans lequel le calculateur est configuré pour :
déterminer l'avance à l'allumage sur base d'un indice de cliquetis déterminé sur base du signal de capteur de cliquetis ; et
déterminer la durée du signal de commande d'injecteur sur base d'un délai d'ouverture déterminé sur base du procédé de détermination de caractéristiques d'ouverture d'un injecteur.

## Patentansprüche

1. Verfahren zum Betreiben einer Brennkraftmaschine, umfassend einen Motorblock mit einer Mehrzahl von Verbrennungszylindern (16) und zugeordneten Einspritzventilen sowie einen Klopfsensor (30), der auf dem Motorblock (14) gelagert ist und eingerichtet ist, um ein Signal zu erzeugen, das für die Schwingungen des Motorblocks repräsentativ ist, wobei das Einspritzen von Kraftstoff auf der Basis einer Einspritzventilöffnungscharakteristik gesteuert wird, die mittels eines Bestimmungsverfahrens bestimmt wird, umfassend:
Erfassen des Signals des Klopfsensors in einem vorbestimmten Messfenster, das mit einem Einspritzsteuersignal synchronisiert ist;
Analysieren des Signals des Sensors in dem Messfenster, um:
eine erste Halbperiode eines ersten Wellenzugs zu bestimmen; und
den lokalen Scheitelwert der ersten Halbperiode zu bestimmen,
wobei die Einspritzventilöffnungscharakteristik auf der Basis dieses lokalen Scheitelwerts bestimmt wird, wobei das Signal des Klopfsensors eingerichtet ist für die Erfassung in einem Frequenzbereich, der den Schwingungen entspricht, die durch die Betätigung des Einspritzventils verursacht werden, wobei die Erfassung in dem Frequenzbereich von 600 bis 800 kHz ist.

2. Verfahren nach Anspruch 1, bei dem ein Detektionsschwellwert angewendet wird und die erste Halbperiode gewählt wird, die den Detektionsschwellwert überschreitet.

3. Verfahren nach einem der vorhergehenden Ansprüche, bei dem der lokale Scheitelwert der ersten Halbperiode als Öffnungszeitpunkt des Einspritzventils (t1) definiert wird.

4. Verfahren nach einem der vorhergehenden Ansprüche, bei dem der Öffnungszeitpunkt (t1) korrigiert wird, um den Abstand zwischen dem Sensor und dem betroffenen Zylinder zu berücksichtigen.

5. Verfahren nach Anspruch 3 oder 4, bei dem die Öffnungszeit (OD) berechnet wird als Differenz zwischen dem korrigierten Zeitpunkt der Öffnung des Einspritzventils (t1) und dem Zeitpunkt (t0) des Beginns des Einspritzsteuersignals.

6. Verfahren nach Anspruch 4 oder 5, bei dem eine Transportzeitkonstante (CT) für jeden Zylinder bestimmt wird als Koordinatenursprung der Regressionsgeraden für eine Menge von Punkten, die, für unterschiedliche Einspritzventile, den Öffnungszeitpunkt des Einspritzventils (t1) und den entsprechenden Referenzöffnungszeitpunkt repräsentieren.

7. Verfahren nach einem der vorhergehenden Ansprüche, bei dem der Beginn des Messfensters mit dem Beginn des Einspritzsteuersignals zusammenfällt.

8. Verfahren nach Anspruch 7, bei dem das Messfenster eine Dauer zwischen 0,6 und 1,5 ms hat, insbesondere in der Größenordnung von 1 ms.

9. Verfahren nach einem der vorhergehenden Ansprüche, bei dem der Klopfsensor ein Beschleunigungssensor ist.

10. Verfahren nach einem der vorhergehenden Ansprüche, bei dem die Erfassung des Signals des Klopfsensors in einem vorbestimmten Messfenster realisiert wird, wenn der Motor in einer Schwachlastzone betrieben wird, insbesondere mit einem Drehmoment kleiner als 40 Nm.

11. Verfahren zum Betreiben einer fremdgezündeten Brennkraftmaschine, umfassend einen Motorblock mit einer Mehrzahl von Zylindern, denen jeweilige Kraftstoffeinspritzventile zugeordnet sind, und wenigstens einen Klopfsensor, der auf dem Motorblock gelagert ist, bei dem ein Rechner eingerichtet ist, um das Klopfen auf der Basis des Signals des Klopfsensors zu überwachen, und bei dem der Rechner eingerichtet ist, um das Betriebsverfahren nach einem der Ansprüche 1 bis 10 durchzuführen, indem, in vordefinierten Intervallen, das Klopfsensorsignal verwendet wird, um die Einspritzventilöffnungscharakteristik zu bestimmen.

12. Verfahren nach Anspruch 11, wobei der Rechner eingerichtet ist, um:
den Vorlauf der Zündung auf der Basis eines Klopfindex zu bestimmen, der auf der Basis des Klopfsensorsignals bestimmt wird; und
die Dauer des Einspritzsteuersignals auf der Basis einer Öffnungszeit zu bestimmen, die auf der Basis des Verfahrens zum Bestimmen von Öffnungscharakteristiken eines Einspritzventils bestimmt wird.

## Claims

1. A method of operating an internal combustion engine comprising an engine block with a plurality of combustion cylinders (16) and associated injectors, as well as a knock sensor (30) mounted on the engine block (14), capable of generating a signal representative of vibrations of the engine block, wherein the fuel injection is controlled based on an injector opening characteristic determined by means of a determination method comprising:
acquiring the knock sensor signal over a predetermined measurement window synchronized on an injection control signal;
analyzing the sensor signal on the measurement window to:
determine a first alternation of a first wave train; and
determine the local maximum of the first alternation,
wherein the injector opening characteristic is determined based on this local maximum, the knock sensor signal being configured for the acquisition in a frequency range corresponding to the vibrations caused by the actuation of the injector, the acquisition being in the frequency range 600 to 800 kHz.

2. The method according to claim 1, wherein a detection threshold is applied, and the first alternation which exceeds the detection threshold is selected.

3. The method according to any one of the preceding claims, wherein the local maximum of the first alternation is defined as the injector opening timing (t1).

4. The method according to any one of the preceding claims, wherein the opening timing (t1) is corrected to take into account the distance between the sensor and the corresponding cylinder.

5. The method according to claim 3 or 4, wherein the opening delay (OD) is calculated as the difference between the corrected, injector opening timing (t1) and the timing (t0) of the start of the injection control signal.

6. The method according to claim 4 or 5, wherein a transport time constant (CT) for each cylinder is determined as the intercept point of the regression line for a set of points representing, for different injectors, the injector opening timing (t1) and the corresponding reference opening timing.

7. The method according to any one of the preceding claims, wherein the start of the measurement window coincides with the start of the injector control signal.

8. The method according to claim 7, wherein the measurement window has a duration between 0.6 and 1.5 ms, in particular in the order of 1 ms.

9. The method according to any one of the preceding claims, wherein the knock sensor is an accelerometer.

10. The method according to any one of the preceding claims, wherein said acquisition of the knock sensor signal over a predetermined measurement window is performed when the engine is operating in a low load area, in particular with a torque less than 40 N.m.

11. A method of operating a spark-ignition internal combustion engine, comprising an engine block with a plurality of cylinders with which respective fuel injectors are associated, and at least one knock sensor mounted on the engine block, wherein a calculator is configured to monitor the knock based on the knock sensor signal, and wherein the calculator is configured to implement the operating method according to any one of claims 1 to 10 using, at predefined intervals, the knock sensor signal to determine the injector opening characteristic.

12. The method according to claim 11, wherein the calculator is configured to:
determine the ignition advance based on a knock index determined based on the knock sensor signal; and
determine the duration of the injector control signal based on an opening delay determined based on the method of determining opening characteristics of an injector.
